# EUROPÄISCHE PATENTSCHRIFT

(11) **EP 3 519 653 B1**
(45) Veröffentlichungstag und Bekanntmachung des Hinweises auf die Patenterteilung: **03.03.2021**
(21) Anmeldenummer: 17777015.3
(22) Anmeldetag: 27.09.2017
(51) Int. Cl.: E05B 81/20

(54) **KRAFTFAHRZEUGSCHLOSSANORDNUNG**
MOTOR VEHICLE LOCK ASSEMBLY
ENSEMBLE SERRURE DE VÉHICULE AUTOMOBILE

(30) Priorität: 30.09.2016 DE 102016118685
(43) Veröffentlichungstag der Anmeldung: 07.08.2019
(73) Patentinhaber: Brose Schließsysteme GbmH & Co. Kommanditgesellschaft, 42369 Wuppertal (DE)
(72) Erfinder: WIRTHS, Rainer, 42329 Wuppertal (DE); PLEINES, Michael, 45327 Essen (DE)
(74) Vertreter: Gottschald Patentanwälte Partnerschaft mbB
(86) Internationale Anmeldenummer: PCT/EP2017/074454
(87) Internationale Veröffentlichungsnummer: WO 2018/060226

(56) Entgegenhaltungen:
- WO-A1-2009/024602
- WO-A1-2011/026763
- DE-A1- 10 361 115
- DE-A1-102005 017 250
- DE-A1-102011 018 847
- DE-A1-102013 018 594
- DE-A1-102014 205 371
- FR-A1- 2 936 267

## Beschreibung

Die Erfindung betrifft eine Kraftfahrzeugschlossanordnung gemäß dem Oberbegriff von Anspruch 1 sowie ein Verfahren zur Ansteuerung einer solchen Kraftfahrzeugschlossanordnung gemäß dem Oberbegriff von Anspruch 14.

Mit der in Rede stehenden Kraftfahrzeugschlossanordnung ist eine Steigerung des Bedienkomforts speziell beim Öffnen einer Kraftfahrzeugtür erreicht worden. Diese Steigerung des Bedienkomforts geht darauf zurück, dass die Kraftfahrzeugschlossanordnung eine motorische Aufdrückfunktion bereitstellt. Dies bedeutet, dass sich die Kraftfahrzeugtür mittels einer Aufdrückanordnung von der vollständig geschlossenen Stellung in eine Aufdrück-Türstellung verstellen lässt, und zwar derart, dass sich ein Eingriffsspalt zwischen einer Eingriffs-Türkante der Kraftfahrzeugtür und der Kraftfahrzeugkarosserie bildet. Dadurch lässt sich die Eingriffs-Türkante von der Hand des Bedieners hintergreifen und die Kraftfahrzeugtür komfortabel manuell öffnen. Neben der Komfortsteigerung ergibt sich mit der in Rede stehenden Kraftfahrzeugschlossanordnung eine neue Gestaltungsfreiheit bei der Gestaltung der Kraftfahrzeugtür, da auf Türaußengriffe vollständig verzichtet werden kann. Eine solche Kraftfahrzeugschlossanordnung zeigt die DE 10 2014 205 371 A1.

Aus der DE 10 2013 018 594 A1, der WO 2011/026763 A1 und der DE 10 2011 018 847 A1 sind sogenannte "Bierkastenschalter" bekannt, bei denen mittels insbesondere kapazitiver Sensoren eine Heckklappe eines Kraftfahrzeugs geöffnet wird, wenn ein Bediener ohne freie Hand eine Fußgeste ausführt.

Aus der FR 2 936 267 A1 ist ein Handschuhfach bekannt, das mittels seiner Kraftfahrzeugschlossanordnung motorisch entriegelt und schwerkraftbedingt geöffnet wird.

Aus der DE 10 2005 017 250 A1 ist eine Kraftfahrzeugtür bekannt, die zur Kollisionsvermeidung semi-automatisch geöffnet wird, indem sie einer führenden Hand eines Bedieners folgt.

Eine Herausforderung bei der aus der DE 10 2014 205 371 A1 bekannten Kraftfahrzeugschlossanordnung besteht darin, den Aufdrückvorgang in sachgerechter

Weise auszulösen. Hierfür ist bislang keine befriedigende Lösung bekannt geworden. Je nach Auslegung ist der insgesamt resultierende Bedienkomfort doch wieder vergleichsweise gering.

Der Erfindung liegt das Problem zugrunde, die bekannte Kraftfahrzeugschlossanordnung derart auszugestalten und weiterzubilden, dass der Bedienkomfort gesteigert wird.

Wesentlich ist die grundsätzliche Überlegung, dass der Bedienkomfort beim Öffnen der Kraftfahrzeugtür beträchtlich gesteigert werden kann, wenn der Aufdrückvorgang durch eine Auslöse-Bedienergeste ausgelöst wird. Dadurch lässt sich das Öffnen der Kraftfahrzeugtür konsequent in intuitiver Weise vollziehen. Im Einzelnen wird vorgeschlagen, dass mittels einer Steuerungsanordnung, die mit einer obigen Sensoranordnung steuerungstechnisch gekoppelt ist, eine vorbestimmte Auslöse-Bedienergeste erfassbar ist. Bei Erfassung dieser vorbestimmten Auslöse-Bedienergeste löst die Steuerungsanordnung dann den Aufdrückvorgang aus. Die Auslöse-Bedienergeste ist dabei vorteilhafterweise so ausgelegt, dass sie nahtlos in ein Hintergreifen der Eingriffs-Türkante übergehen kann.

Bei der bevorzugten Ausgestaltung gemäß Anspruch 2 umfasst die Auslöse-Bedienergeste eine vorbestimmte Auslöse-Handbewegung durch den Bediener. Die Auslöse-Bedienergeste kann aber auch weitere Aspekte im Hinblick auf die Position, Laufbewegung, Laufgeschwindigkeit, Körperhaltung o. dgl. des Bedieners umfassen. In diesem Zusammenhang darf darauf hingewiesen werden, dass auch mehrere vorbestimmte Auslöse-Bedienergesten definiert sein können, die den Aufdrückvorgang oder andere Vorgänge auslösen können.

Bei der besonders bevorzugten Ausgestaltung gemäß Anspruch 5 ist eine Synchronisierung zwischen der Bewegung der Hand des Bedieners und dem Aufdrückvorgang vorgesehen, und zwar derart, dass zu dem Zeitpunkt, zu dem die Hand des Bedieners die Eingriffs-Türkante erreicht, der Aufdrückvorgang bereits ausgelöst, bereits fortgeschritten oder bereits abgeschlossen ist. Damit lassen sich Wartezeiten, die der Bediener ggfs. bis zum Abschluss des Aufdrückvorgangs in Kauf nehmen muss, vermeiden.

Die weiter bevorzugten Ausgestaltungen gemäß den Ansprüchen 6 bis 8 betreffen vorteilhafte konstruktive Varianten für die Auslegung der Sensoranordnung. Dabei erlaubt die Auslegung der Sensoranordnung als kapazitive Sensoranordnung gemäß Anspruch 6 eine bauraumoptimierte Integration in die Kraftfahrzeugtür.

Die ebenfalls bevorzugten Ausgestaltungen gemäß den Ansprüchen 9 bis 11 betreffen die Ausstattung der Kraftfahrzeugschlossanordnung mit einer Schließhilfsanordnung, die einen motorischen Schließhilfsvorgang der Kraftfahrzeugtür aus einer Vorschließ-Türstellung heraus in die vollständig geschlossene Stellung erlaubt. Dabei ist es gemäß Anspruch 11 vorzugsweise vorgesehen, dass die Sensoranordnung von der Steuerungsanordnung je nach Stellung der Kraftfahrzeugtür unterschiedlich angesteuert wird. Dadurch kann die Sensoranordnung neben der Erfassung der Auslöse-Bedienergeste auch andere Funktionen bereitstellen. Dabei kann es sich beispielsweise um die Erfassung einer Not-Aus-Anforderung durch den Bediener während des Schließhilfsvorgangs handeln.

Nach einer weiteren Lehre gemäß Anspruch 14, der eigenständige Bedeutung zukommt, wird ein Verfahren zur Ansteuerung einer vorschlagsgemäßen Kraftfahrzeugschlossanordnung als solches beansprucht.

Wesentlich nach dem vorschlagsgemäßen Verfahren ist, dass mittels der Steuerungsanordnung über die Sensoranordnung eine vorbestimmte Auslöse-Bedienergeste erfassbar ist und dass bei Erfassung der vorbestimmten Auslöse-Bedienergeste der Aufdrückvorgang ausgelöst wird. Insoweit darf auf alle Ausführungen zu der Betriebsweise der vorschlagsgemäßen Kraftfahrzeugschlossanordnung verwiesen werden.

Bei der besonders bevorzugten Ausgestaltung gemäß Anspruch 15 wird die oben angesprochene Synchronisierung zwischen dem Aufdrückvorgang und der Bewegung der Hand des Bedieners vorgeschlagen. Auch insoweit darf auf die Ausführungen zu der Betriebsweise der vorschlagsgemäßen Kraftfahrzeugschlossanordnung verwiesen werden.

Im Folgenden wird die Erfindung anhand einer lediglich ein Ausführungsbeispiel darstellenden Zeichnung näher erläutert. In der Zeichnung zeigt
- Fig. 1: ein Kraftfahrzeug mit einer vorschlagsgemäßen Kraftfahrzeugschlossanordnung in einer ersten Ausführungsform,
- Fig. 2: ein Kraftfahrzeug mit einer vorschlagsgemäßen Kraftfahrzeugschlossanordnung in einer zweiten Ausführungsform und
- Fig. 3: die der vorschlagsgemäßen Kraftfahrzeugtüranordnung gemäß Fig. 1, 2 jeweils zugeordnete Kraftfahrzeugtür a) in der HauptschließTürstellung, b) in der Aufdrück-Türschließstellung und c) in der Vorschließ-Türstellung.

Die vorschlagsgemäße Kraftfahrzeugschlossanordnung 1 ist einer mit einer Kraftfahrzeugkarosserie 2 verstellbar gekoppelten Kraftfahrzeugtür 3 zugeordnet. Bei dem dargestellten und insoweit bevorzugten Ausführungsbeispiel handelt es sich bei der Kraftfahrzeugtür 3 um eine Seitentür. Grundsätzlich kann es sich bei der Kraftfahrzeugtür 3 aber auch um eine Hecktür handeln. In beiden Fällen ist die Kraftfahrzeugtür 3 vorzugsweise um eine im Wesentlichen vertikal ausgerichtete, geometrische Türachse 4 schwenkbar, wobei die Türachse 4 während des Schwenkens nicht notwendigerweise ortsfest sein muss. Ferner darf darauf hingewiesen werden, dass die Kraftfahrzeugtür 3 auch als Schiebetür ausgestaltet sein kann. Die Kraftfahrzeugschlossanordnung 1 weist ein Kraftfahrzeugschloss 5 auf, das im montierten Zustand vorzugsweise an der Kraftfahrzeugtür 3 angeordnet ist. Alternativ kann es auch vorgesehen sein, dass das Kraftfahrzeugschloss 5 an der Kraftfahrzeugkarosserie 2 angeordnet ist.

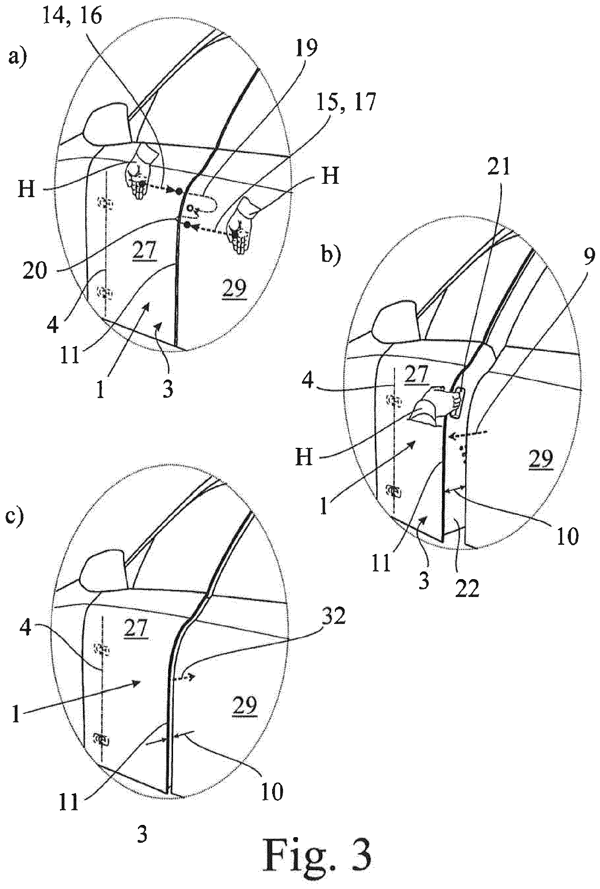

Die vorschlagsgemäße Kraftfahrzeugschlossanordnung 1 weist eine Aufdrückanordnung 6 mit einem Aufdrückantrieb 7 auf, der einen Antriebsstrang zur Ausübung einer Antriebskraft auf die Kraftfahrzeugtür 3 in deren Öffnungsrichtung 8 aufweist. Dadurch ist die Kraftfahrzeugtür 3 mittels der Aufdrückanordnung 6 in einem motorischen Aufdrückvorgang 9 aus einer Schließ-Türstellung (Fig. 3a) heraus in eine weiter in deren Öffnungsrichtung 8 gelegene Aufdrück-Türstellung (Fig. 3b) verstellbar. Dadurch wiederum ist ein Spalt 10, hier und vorzugsweise ein Eingriffsspalt 10, zwischen einer Eingriffs-Türkante 11 der Kraftfahrzeugtür 3 und der Kraftfahrzeugkarosserie 2 erzeugbar. Hier und vorzugsweise ist die Aufdrückanordnung 6 dem Kraftfahrzeugschloss 5 zugeordnet, so dass sich die Aufdrückanordnung 6 zusammen mit dem Kraftfahrzeugschloss 5 vormontieren lässt, was fertigungstechnisch vorteilhaft ist. Grundsätzlich kann die Aufdrückanordnung 6 aber auch separat vom Kraftfahrzeugschloss 5 ausgestaltet sein.

Der Aufdrückvorgang 9 ergibt sich für beide bevorzugten Ausführungsbeispiele aus dem Übergang von Fig. 3a auf Fig. 3b. Dabei handelt es sich bei der Schließ-Türstellung, von der der Aufdrückvorgang 9 ausgeht, vorzugsweise um die Hauptschließ-Türstellung, also die vollständig geschlossene Stellung der Kraftfahrzeugtür 3. Grundsätzlich kann es sich bei dieser Schließ-Türstellung aber auch um die in Fig. 3c gezeigte, noch zu erläuternde, Vorschließ-Türstellung handeln.

Bei dem im Rahmen des Aufdrückvorgangs 9 erzeugten Spalt 10 handelt es sich um einen Eingriffsspalt, der so bemessen ist, dass der Eingriffsspalt 10 und insbesondere die Eingriffs-Türkante 11, durch die Hand H des Bedieners hintergriffen werden kann. In der Aufdrück-Türstellung (Fig. 3b) ergibt sich ein Eingriffsspalt 10, dessen Spaltbreite größer als 18 mm und weiter vorzugsweise größer als 22 mm ist. In besonders bevorzugter Ausgestaltung liegt die Spaltbreite des Eingriffsspalts 10 zwischen etwa 26 mm und etwa 31 mm. In weiter bevorzugter Ausgestaltung liegt die Spaltbreite des Eingriffsspalts 10 bei etwa 30 mm. Diese Werte haben sich insbesondere für das Hintergreifen des Eingriffsspalts 10, insbesondere der Eingriffs-Türkante 11, durch die Hand H des Bedieners als vorteilhaft herausgestellt.

In der Vorschließ-Türstellung verbleibt lediglich ein Spalt 10 zwischen der Kraftfahrzeugtür 3, insbesondere der Eingriffs-Türkante 11, und der Kraftfahrzeugkarosserie 2 mit einer Spaltbreite von weniger als 10 mm, vorzugsweise von etwa 6 mm. Alle Spaltbreiten werden vorliegend stets in Öffnungsrichtung 8 der Kraftfahrzeugtür 3 gemessen.

Dem Auslösen des Aufdrückvorgangs 9 kommt vorliegend besondere Bedeutung zu. Hierfür sind zunächst eine Steuerungsanordnung 12 und eine mit der Steuerungsanordnung 12 steuerungstechnisch gekoppelte Sensoranordnung 13 vorgesehen. Die Steuerungsanordnung 12 dient vorliegend der elektrischen Ansteuerung der Kraftfahrzeugschlossanordnung 1 insgesamt. Die Ansteuerung der Sensoranordnung 13 umfasst je nach Auslegung der Sensoranordnung 13 die Versorgung der Sensoranordnung 13 mit einer Versorgungsspannung und/oder einer Messspannung sowie der Empfang der von der Sensoranordnung 13 erzeugten Sensorsignale. Bei der hier und vorzugsweise kapazitiven Sensoranordnung 13 beaufschlagt die Steuerungsanordnung 12 die Sensoranordnung 13 mit einer Messspannung und ermittelt aus dem resultierenden elektrischen Verhalten der Sensoranordnung 13 die Existenz der Hand H des Bedieners und/oder die Entfernung der Hand H des Bedieners zu der Sensoranordnung 13.

Wesentlich ist nun, dass mittels der Steuerungsanordnung 12 über die Sensoranordnung 13 eine vorbestimmte Auslöse-Bedienergeste 14, 15 erfassbar ist, wobei die Steuerungsanordnung 12 bei einer Erfassung einer vorbestimmten Auslöse-Bedienergeste 14, 15 den Aufdrückvorgang 9 auslöst. Dabei können auch mehrere Auslöse-Bedienergesten 14, 15 definiert sein, die jeweils den Aufdrückvorgang 9 auslösen. In Fig. 3 sind zwei solcher Auslöse-Bedienergesten 14, 15 dargestellt.

Die Auslöse-Bedienergeste 14, 15 kann in ganz unterschiedlicher Weise definiert sein. Beispielsweise ist es denkbar, dass die Lage, Laufbewegung, Laufgeschwindigkeit, Körperhaltung, o. dgl. des Bedieners in der Auslöse-Bedienergeste 14, 15 definiert sind. Hier und vorzugsweise umfasst die vorbestimmte Auslöse-Bedienergeste 14, 15 jedenfalls eine vorbestimmte Auslöse-Handbewegung 16, 17. Die Auslöse-Handbewegung 16, 17 umfasst gemäß Fig. 3a vorzugsweise ein vorbestimmtes Bewegungsmuster, insbesondere einen vorbestimmten Bewegungspfad. Dabei kann das Bewegungsmuster beispielsweise so definiert sein, dass das Bewegungsmuster eine Wischbewegung oder eine Hin- und Herbewegung umfasst. Der Bewegungspfad kann bezogen auf die Kraftfahrzeugkarosserie 2 durch eine Folge absoluter Positionen definiert sein. Vorzugsweise ist es allerdings so, dass der Bewegungspfad als solcher definiert ist, und zwar unabhängig von dessen absoluter Position. Vorzugsweise ist es so, dass ein Bewegungsmuster bzw. ein Bewegungspfad im Sinne der Auslöse-Bedienergeste 14, 15 als erfasst gilt, wenn das Bewegungsmuster bzw. der Bewegungspfad in einem vorbestimmten Bereich der Kraftfahrzeugkarosserie 2 bzw. der Kraftfahrzeugtür 3 vorliegt.

Alternativ oder zusätzlich kann die Auslöse-Handbewegung 16, 17 eine vorbestimmte Bewegungsgeschwindigkeit und/oder einen vorbestimmten Bewegungsgeschwindigkeitsverlauf umfassen. Weiter ist es denkbar, dass die Auslöse-Handbewegung 16, 17 eine vorbestimmte Bewegungsbeschleunigung und/oder einen vorbestimmten Bewegungsbeschleunigungsverlauf umfasst.

Wie oben angesprochen, ist es vorzugsweise vorgesehen, dass die Auslöse-Handbewegung 16, 17 eine Wischbewegung der Hand H des Bedieners entlang einer Außenhaut 18 des Kraftfahrzeugs umfasst. Dabei kann es sich um die Außenhaut 18 der Kraftfahrzeugtür 3 oder einer weiteren Kraftfahrzeugtür oder der Kraftfahrzeugkarosserie 2 handeln.

Grundsätzlich kann die Auslöse-Handbewegung 16, 17 von der Eingriffs-Türkante 11 wegführen. Angesichts der Tatsache, dass vorzugsweise der Eingriffsspalt 10, insbesondere die Eingriffs-Türkante 11, durch die Hand H des Bedieners hintergriffen werden soll, ist es vorzugsweise vorgesehen, dass die Auslöse-Handbewegung 16, 17 auf die Eingriffs-Türkante 11 zuläuft, wie in Fig. 3a mit zwei möglichen Auslöse-Handbewegungen, die in entgegengesetzten Richtungen verlaufen, angedeutet ist.

Alternativ kann es vorgesehen sein, dass die Auslöse-Handbewegung 16, 17 im Bereich der Eingriffs-Türkante 11 der Kraftfahrzeugtür 3 endet oder die Eingriffs-Türkante 11 der Kraftfahrzeugtür 3 sogar überstreicht.

Ganz allgemein ist es vorzugsweise vorgesehen, dass zumindest ein Teil der Auslöse-Handbewegung 16, 17 im Wesentlichen quer zu der Eingriffs-Türkante 11 verläuft. Dabei kann die Auslöse-Handbewegung 16, 17, wie oben angesprochen, entlang der Außenhaut 18 des Kraftfahrzeugs verlaufen. Denkbar ist aber auch, dass die Auslöse-Handbewegung 16, 17 quer zu der Außenhaut 18 oder in einem Winkel zu der Außenhaut 18 verläuft.

Der Synchronisierung des Aufdrückvorgangs 9 mit der Bewegung der Hand H des Bedieners kommt vorliegend ganz besondere Bedeutung zu. Vorzugsweise steuert die Steuerungsanordnung 12 den Aufdrückvorgang 9 auf die Erfassung der Auslöse-Bedienergeste 14, 15 hin derart, dass bei fortgesetzter Bewegung 19, 20 der Hand H des Bedieners in Richtung der Eingriffs-Türkante 11 zu dem Zeitpunkt, zu dem die Hand H des Bedieners die Eingriffs-Türkante 11 erreicht, der Aufdrückvorgang 9 bereits ausgelöst, bereits fortgeschritten oder bereits abgeschlossen ist. Dies bedeutet, dass die Kraftfahrzeugtür 3 bereits teilweise oder sogar vollständig aufgedrückt ist, wenn die Hand H des Bedieners die Eingriff-Türkante 11 erreicht. Ein Warten auf den Abschluss des Aufdrückvorgangs 9 muss vom Bediener also nicht in Kauf genommen werden.

Fig. 3a zeigt, dass die fortgesetzte Bewegung 19, 20 in dem oben angesprochenen Hintergreifen des Eingriffsspalts 10 mündet. Das Hintergreifen ist beispielhaft in Fig. 3b gezeigt, bei dem die Hand H des Bedieners in eine speziell hierfür vorgesehene Tasche 21 in der Stirnseite 22 der Kraftfahrzeugtür 3 eintaucht.

Die obige Synchronisierung zwischen dem Aufdrückvorgang 9 und der Auslöse-Handbewegung 16, 17 kann in besonders einfacher Weise dadurch realisiert sein, dass die Auslöse-Handbewegung 16, 17 der Eingriffs-Türkante 11 vorgelagert ist. Damit wird erreicht, dass die Auslöse-Bedienergeste 14, 15 mittels der Steuerungsanordnung 12 erfasst wird, noch bevor die Hand H des Bedieners die Eingriffs-Türkante 11 erreicht hat. Sofern unmittelbar nach dem Erfassen der Auslöse-Bedienergeste 14, 15 der Aufdrückvorgang 9 ausgelöst wird, kann die verbleibende, fortgesetzte Bewegung 19, 20 bis zu der Eingriffs-Türkante 11 genutzt werden, um den Aufdrückvorgang 9 zu starten oder sogar abzuschließen.

Es ist aber auch denkbar, dass mit der Erfassung der Auslöse-Bedienergeste 14, 15 bereits die Bewegungsgeschwindigkeit der Hand H des Bedieners ermittelt wird, so dass der Zeitpunkt, zu dem die Hand H des Bedieners die Eingriffs-Türkante 11 voraussichtlich erreicht, berechnet werden kann. Basierend auf dieser Berechnung kann der Aufdrückvorgang 9 durch eine entsprechende Ansteuerung des Aufdrückantriebs 7 so durchgeführt werden, dass der Aufdrückvorgang im obigen Sinne rechtzeitig abgeschlossen ist. Dabei kann vereinfachend unterstellt werden, dass die Bewegungsgeschwindigkeit der fortgesetzten Bewegung 19, 20 gegenüber der Bewegungsgeschwindigkeit während der Auslöse-Handbewegung 16, 17 unverändert bleibt.

Für die Auslegung der Sensoranordnung 13 sind ganz unterschiedliche vorteilhafte Varianten denkbar. Beispielsweise kann die Sensoranordnung 13 auf unterschiedlichen Sensorprinzipien beruhen. Denkbar ist die Ausgestaltung der Sensoranordnung 13 als induktive Sensoranordnung, als optische Sensoranordnung, als ultraschallbasierte Sensoranordnung o. dgl.. Hier und vorzugsweise ist die Sensoranordnung 13 allerdings als kapazitive Sensoranordnung, insbesondere als kapazitive Näherungssensoranordnung ausgestaltet. Eine solche kapazitive Sensoranordnung 13 lässt sich durch ihren einfachen Aufbau ohne Weiteres bauraumoptimiert einsetzen und bietet gleichzeitig eine hohe Robustheit gegenüber Störeinflüssen, wie wechselnden Umgebungsbedingungen, insbesondere im Hinblick auf Feuchte, Verschmutzung o dgl.. Eine solche kapazitive Sensoranordnung 13 weist mindestens eine mit der Steuerungsanordnung 12 steuerungstechnisch gekoppelte Messelektrode 23, 24 auf, wobei zwischen der Messelektrode 23, 24 und der Kraftfahrzeugmasse 25 eine Messkapazität besteht, deren Größe abhängig von der Lage der Hand H des Bedieners ist. Grundsätzlich kann es auch sein, dass die Messkapazität zwischen der Messelektrode 23, 24 und einer weiteren Elektrode vorgesehen ist. Hier und vorzugsweise sind zwei Messelektroden 23, 24 vorgesehen, die die Hand H des Bedieners im Zuge der dargestellten Auslöse-Handbewegungen 16, 17 nacheinander erfassen.

Eine Möglichkeit zur Erfassung der Existenz bzw. der Lage der Hand H des Bedieners vor der jeweiligen Messelektrode 23, 24 besteht darin, dass die Steuerungsanordnung 12 die Messelektrode 23, 24 gegenüber Masse 25 mit einer Wechselspannung beaufschlagt und aus dem resultierenden Stromverlauf auf die Größe der Messkapazität und daraus wiederum auf die Existenz bzw. Lage der Hand H des Bedieners zurückschließt. Dabei gilt die Auslöse-Bedienergeste 14, 15 als erfasst, wenn die Hand H des Bedieners von beiden Messelektroden 23, 24 in einer vorbestimmten Reihenfolge und innerhalb eines vorbestimmten Zeitintervalls erfasst worden ist.

Für die Ausgestaltung der Messelektroden 23, 24 sind grundsätzlich verschiedene Auslegungsvarianten denkbar. Hier und vorzugsweise sind die Messelektroden 23, 24 jeweils länglich ausgestaltet. Weiter vorzugsweise ist es so, dass die Messelektroden 23, 24 im Wesentlichen quer zu zumindest einem Teil der Auslöse-Handbewegung 16, 17 ausgerichtet sind.

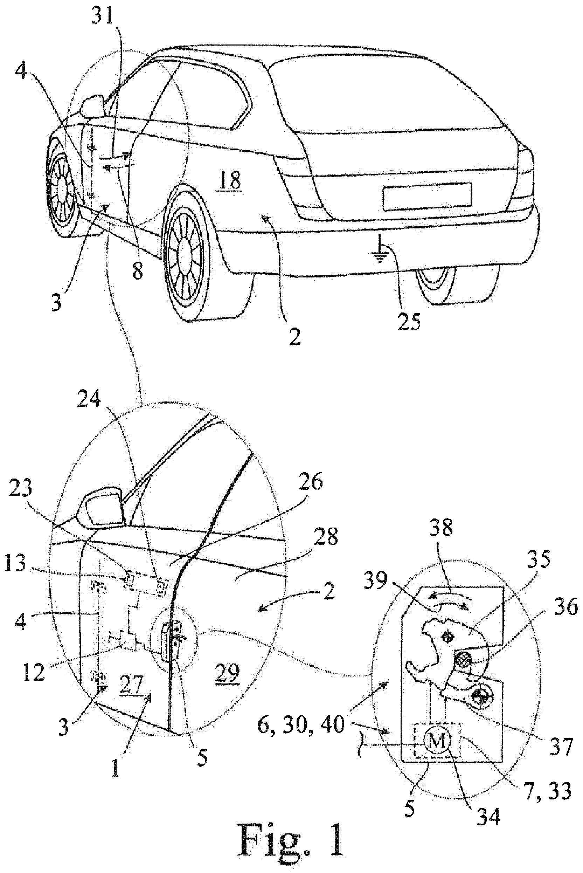

Bei der in Fig. 1 dargestellten und insoweit bevorzugten Ausgestaltung ist die Sensoranordnung 13 zumindest zum Teil, hier und vorzugsweise vollständig, in einem Hohlraum 26 der Kraftfahrzeugtür 3, insbesondere hinter dem Türaußenblech 27 der Kraftfahrzeugtür 3, angeordnet. Dabei kann es grundsätzlich vorteilhaft sein, dass das Türaußenblech 27 eine nicht dargestellte Öffnung aufweist, durch die hindurch die Sensoranordnung 13 die Hand H des Bedieners erfassen kann. Mit der in Fig. 1 dargestellten Anordnung lässt sich die in Fig. 3a dargestellte Auslöse-Handbewegung 16 erfassen.

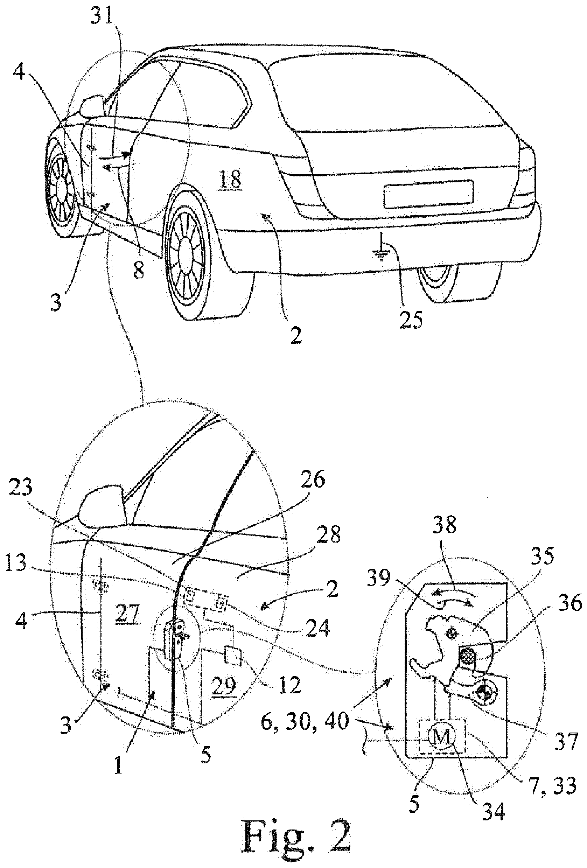

Alternativ kann es vorgesehen sein, dass die Sensoranordnung 13 in einem Hohlraum 28 der Kraftfahrzeugkarosserie 2, hier und vorzugsweise hinter einem Karosserieblech 29 der Kraftfahrzeugkarosserie 2, angeordnet ist. Dies ist der Darstellung gemäß Fig. 2 zu entnehmen. Mit der in Fig. 2 gezeigten Lage der Sensoranordnung 13 lässt sich die in Fig. 3a gezeigte Auslöse-Handbewegung 17 erfassen.

Alternativ kann die Sensoranordnung 13 zumindest zum Teil in oder an einem Anbauteil, vorzugsweise zwischen dem Anbauteil und der Kraftfahrzeugtür 3, angeordnet sein. Bei dem Anbauteil kann es sich beispielsweise um eine Fensterleiste, um eine Zierleiste, um ein Emblem o. dgl. handeln.

Zusätzlich zu der oben angesprochenen Aufdrückanordnung 6 weist die vorschlagsgemäße Kraftfahrzeugschlossanordnung 1, insbesondere das Kraftfahrzeugschloss 5, zusätzlich eine Schließhilfsanordnung 30 auf, mit der die Kraftfahrzeugtür 3 in einem motorischen Schließhilfsvorgang 32 aus einer Vorschließ-Türstellung (Fig. 3c) heraus in eine weiter in deren Schließrichtung 31 gelegene Hauptschließ-Türstellung, in der die Kraftfahrzeugtür 3 vollständig geschlossen ist, verstellbar ist. Dies ist insoweit eine Komfortfunktion, als der Bediener beim Schließen der Kraftfahrzeugtür 3 die Kraftfahrzeugtür 3 lediglich in die in Fig. 3c dargestellte Vorschließ-Türstellung verstellen muss, bei der hohe Türdichtungsdrücke regelmäßig noch nicht wirken. Das Zuziehen der Kraftfahrzeugtür 3 gegen die Türdichtungsdrücke in die vollständig geschlossene Stellung, also in die oben angesprochenen Hauptschließ-Türstellung, wird dann von einem Schließhilfsantrieb 33 der Schließhilfsanordnung 30 übernommen. Eine besonders kompakte und gleichzeitig kostengünstige Ausgestaltung ergibt sich hier und vorzugsweise dadurch, dass die Schließhilfsanordnung 30 zumindest einen Teil der Aufdrückanordnung 6 bereitstellt. Im Einzelnen ist es vorzugsweise vorgesehen, dass sich die Schließhilfsanordnung 30 und die Aufdrückanordnung 6 einen Antriebsmotor 34 zur Erzeugung von Antriebsbewegungen teilen.

Eine besonders effektive Nutzung der Sensoranordnung 13 ergibt sich vorliegend dadurch, dass in einer besonders bevorzugten Ausgestaltung die Steuerungsanordnung 12 die Sensoranordnung 13 bei geschlossener Kraftfahrzeugtür 3 einerseits und bei zumindest geringfügig geöffneter Kraftfahrzeugtür 3, insbesondere während des Schließhilfsvorgangs 32, andererseits unterschiedlich ansteuert. Hier ist es beispielsweise denkbar, dass die Steuerungsanordnung 12 die Sensoranordnung 13 während des Schließhilfsvorgangs 32 deaktiviert. Der Begriff "deaktiviert" bedeutet vorliegend jedenfalls, dass die Steuerungsanordnung 12 keine Sensormesswerte von der Sensoranordnung 13 empfängt. Vorzugsweise bedeutet dies zusätzlich, dass die Steuerungsanordnung 12 die Messelektroden 23, 24 stromlos schaltet.

Denkbar ist auch, dass die Steuerungsanordnung 12 in Abhängigkeit von der Stellung der Kraftfahrzeugtür 3 eine unterschiedliche Sensitivität der Sensoranordnung 13 einstellt. Dies bedeutet beispielsweise, dass die Sensoranordnung 13 je nach Sensitivität auf unterschiedliche Abstandsbereiche hin eingestellt wird.

Für die Ausgestaltung des Kraftfahrzeugschlosses 5 sind verschiedene vorteilhafte Varianten denkbar. Den Fig. 1, 2 lässt sich entnehmen, dass das Kraftfahrzeugschloss 5 eine Schlossfalle 35, die mit einem Schließteil 36, hier und vorzugsweise einem Schließbügel, und eine der Schlossfalle 35 zugeordnete Sperrklinke 37 aufweist. Eine solche Anordnung eines Sperrwerks mit Schlossfalle 35 und Sperrklinke 37 ist grundsätzlich bekannt. Die Schlossfalle 35 lässt sich in eine Hauptschließstellung bringen und dort von der Sperrklinke 37 halten, so dass die Kraftfahrzeugtür 3 in der Hauptschließ-Türstellung steht. Ferner lässt sich die Schlossfalle 35 in eine Vorschließstellung bringen und dort von der Sperrklinke 37 halten, so dass die Kraftfahrzeugtür 3 in der Vorschließ-Türstellung steht.

Interessant ist vorliegend, dass die Aufdrückanordnung 6 mit der Schlossfalle 35 gekoppelt oder koppelbar ist. Dabei ist es zunächst einmal vorgesehen, dass die Verstellung der Kraftfahrzeugtür 3 in die Aufdrück-Türstellung auf die Verstellung der Schlossfalle 35 in deren Öffnungsrichtung 38 durch die Aufdrückanordnung 6 zurückgeht. Alternativ oder zusätzlich ist es vorgesehen, dass im Rahmen des Schließhilfsvorgangs 32 die Verstellung der Kraftfahrzeugtür 3 in die Hauptschließ-Türstellung auf die Verstellung der Schlossfalle 35 in deren Schließrichtung 39 durch die Aufdrückanordnung 6 zurückgeht. Insoweit wird die Schlossfalle 35 hier mehrfach genutzt, nämlich für den haltenden Eingriff mit dem Schließteil 36, für die Übertragung der für den Aufdrückvorgang 9 erforderlichen Kräfte und für die Übertragung der für den Schließhilfsvorgang 32 erforderlichen Kräfte.

Wiederum alternativ oder zusätzlich kann es vorgesehen sein, dass eine Öffnungshilfsanordnung 40 vorgesehen ist, mit der die Sperrklinke 37 motorisch aushebbar ist, wobei im Rahmen des Aufdrückvorgangs 9 die Steuerungsanordnung 12 zunächst das motorische Ausheben der Sperrklinke 37 und erst anschließend die Ansteuerung des Aufdrückantriebs 7 zum Aufdrücken der Kraftfahrzeugtür 3 auslöst. Vorzugsweise ist es hier so, dass sich die Öffnungshilfsanordnung 40, die Schließhilfsanordnung 30 und die Aufdrückanordnung 6 den einen Antriebsmotor 34 zur Erzeugung von Antriebsbewegungen teilen.

Nach einer weiteren Lehre, der eigenständige Bedeutung zukommt, wird ein Verfahren zur Ansteuerung einer vorschlagsgemäßen Kraftfahrzeugschlossanordnung 1 als solches beansprucht.

Wesentlich nach dem Verfahren ist, dass mittels der Steuerungsanordnung 12 über die Sensoranordnung 13 eine vorbestimmte Auslöse-Bedienergeste erfassbar ist, wobei mittels der Steuerungsanordnung 12 bei Erfassung der vorbestimmten Auslöse-Bedienergeste der Aufdrückvorgang ausgelöst wird. Insoweit darf auf alle Ausführungen zu der Betriebsweise der vorschlagsgemäßen Kraftfahrzeugschlossanordnung 1 verwiesen werden. Dies gilt insbesondere für die weiter oben erläuterte Synchronisierung des Aufdrückvorgangs 9 auf die Auslöse-Bedienergeste 14, 15, insbesondere der Auslöse-Handbewegung 16, 17.

## Patentansprüche

1. Kraftfahrzeugschlossanordnung für eine mit einer Kraftfahrzeugkarosserie (2) verstellbar gekoppelten Kraftfahrzeugtür (3), insbesondere Seitentür, wobei ein Kraftfahrzeugschloss (5) vorgesehen ist, das im montierten Zustand an der Kraftfahrzeugtür (3) oder an der Kraftfahrzeugkarosserie (2) angeordnet ist, wobei die Kraftfahrzeugschlossanordnung (1), insbesondere das Kraftfahrzeugschloss (5), eine Aufdrückanordnung (6) aufweist, mit der die Kraftfahrzeugtür (3) in einem motorischen Aufdrückvorgang (9) aus einer Schließ-Türstellung, insbesondere einer Hauptschließ-Türstellung oder einer Vorschließ-Türstellung, heraus in eine weiter in deren Öffnungsrichtung (8) gelegene Aufdrück-Türstellung verstellbar ist und dadurch ein Eingriffsspalt zwischen einer Eingriffs-Türkante (11) der Kraftfahrzeugtür (3) und der Kraftfahrzeugkarosserie (2) erzeugbar ist,
wobei eine Steuerungsanordnung (12) und damit steuerungstechnisch gekoppelt eine Sensoranordnung (13) vorgesehen sind,
**dadurch gekennzeichnet,**
**dass** mittels der Steuerungsanordnung (12) über die Sensoranordnung (13) eine vorbestimmte Auslöse-Bedienergeste (14, 15) erfassbar ist und dass die Steuerungsanordnung (12) bei Erfassung der vorbestimmten Auslöse-Bedienergeste (14, 15) den Aufdrückvorgang (9) auslöst.

2. Kraftfahrzeugschlossanordnung nach Anspruch 1, **dadurch gekennzeichnet, dass** die vorbestimmte Auslöse-Bedienergeste (14, 15) eine vorbestimmte Auslöse-Handbewegung (16, 17) umfasst und dass die Auslöse-Handbewegung (16, 17) ein vorbestimmtes Bewegungsmuster, insbesondere einen vorbestimmten Bewegungspfad und/oder eine vorbestimmte Bewegungsgeschwindigkeit und/oder einen vorbestimmten Bewegungsgeschwindigkeitsverlauf und/oder eine vorbestimmte Bewegungsbeschleunigung und/oder einen vorbestimmten Bewegungsbeschleunigungsverlauf, umfasst.

3. Kraftfahrzeugschlossanordnung nach Anspruch 1 oder 2, **dadurch gekennzeichnet, dass** die Auslöse-Handbewegung (16, 17) auf die Eingriffs-Türkante (11) der Kraftfahrzeugtür (3) zuläuft oder im Bereich der Eingriffs-Türkante (11) der Kraftfahrzeugtür (3) endet oder die Eingriffs-Türkante (11) der Kraftfahrzeugtür (3) überstreicht.

4. Kraftfahrzeugschlossanordnung nach einem der vorhergehenden Ansprüche, **dadurch gekennzeichnet, dass** zumindest ein Teil der Auslöse-Handbewegung (16, 17) im Wesentlichen quer zu der Eingriffs-Türkante (11) verläuft.

5. Kraftfahrzeugschlossanordnung nach einem der vorhergehenden Ansprüche, **dadurch gekennzeichnet, dass** die Steuerungsanordnung (12) den Aufdrückvorgang (9) auf die Erfassung der Auslöse-Bedienergeste (14, 15) hin derart steuert, dass bei fortgesetzter Bewegung der Hand (H) des Bedieners, insbesondere mit unveränderter Bewegungsgeschwindigkeit, in Richtung der Eingriffs-Türkante (11) zu dem Zeitpunkt, zu dem die Hand (H) des Bedieners die Eingriffs-Türkante (11) erreicht, der Aufdrückvorgang (9) bereits ausgelöst, bereits fortgeschritten oder bereits abgeschlossen ist.

6. Kraftfahrzeugschlossanordnung nach einem der vorhergehenden Ansprüche, **dadurch gekennzeichnet, dass** die Sensoranordnung (13) als kapazitive Sensoranordnung, insbesondere als kapazitive Näherungssensoranordnung, ausgestaltet ist, vorzugsweise, dass die Sensoranordnung (13) mindestens eine mit der Steuerungsanordnung (12) steuerungstechnisch gekoppelte Messelektrode (23, 24) aufweist, wobei zwischen der Messelektrode (23, 24) und einer weiteren Elektrode oder der Kraftfahrzeugmasse (25) eine Messkapazität besteht, deren Größe abhängig von der Lage der Hand (H) des Bedieners ist.

7. Kraftfahrzeugschlossanordnung nach einem der vorhergehenden Ansprüche, **dadurch gekennzeichnet, dass** die mindestens eine Messelektrode (23, 24) länglich ausgestaltet ist, vorzugsweise, dass die mindestens eine Messelektrode (23, 24) im Wesentlichen quer zu zumindest einem Teil der Auslöse-Handbewegung (16, 17) ausgerichtet ist.

8. Kraftfahrzeugschlossanordnung nach einem der vorhergehenden Ansprüche, **dadurch gekennzeichnet, dass** die Sensoranordnung (13) zumindest zum Teil in einem Hohlraum (26) der Kraftfahrzeugtür (3), insbesondere hinter dem Türaußenblech (27) der Kraftfahrzeugtür (3), vorzugsweise hinter einer Öffnung in dem Türaußenblech (27) der Kraftfahrzeugtür (3), angeordnet ist, oder, dass die Sensoranordnung (13) in einem Hohlraum (28) der Kraftahrzeugkarosserie (2), insbesondere hinter einem Karosserieblech (29) der Kraftfahrzeugkarosserie (2), angeordnet ist, oder, dass die Sensoranordnung (13) zumindest zum Teil in oder an einem Anbauteil, vorzugsweise zwischen dem Anbauteil und der Kraftfahrzeugtür (3), angeordnet ist.

9. Kraftfahrzeugschlossanordnung nach einem der vorhergehenden Ansprüche, **dadurch gekennzeichnet, dass** die Kraftfahrzeugschlossanordnung (1), insbesondere das Kraftfahrzeugschloss (5), eine Schließhilfsanordnung (30) aufweist, mit der die Kraftfahrzeugtür (3) in einem motorischen Schließhilfsvorgang (32) aus einer Vorschließ-Türstellung heraus in eine weiter in deren Schließrichtung (31) gelegene Hauptschließ-Türstellung verstellbar ist.

10. Kraftfahrzeugschlossanordnung nach einem der vorhergehenden Ansprüche, **dadurch gekennzeichnet, dass** die Schließhilfsanordnung (30) zumindest einen Teil der Aufdrückanordnung (9) bereitstellt, vorzugsweise, dass sich die Schließhilfsanordnung (30) und die Aufdrückanordnung (9) einen Antriebsmotor (34) zur Erzeugung von Antriebsbewegungen teilen.

11. Kraftfahrzeugschlossanordnung nach einem der vorhergehenden Ansprüche, **dadurch gekennzeichnet, dass** die Steuerungsanordnung (12) die Sensoranordnung (13) bei geschlossener Kraftfahrzeugtür (3) einerseits und bei zumindest geringfügig geöffneter Kraftfahrzeugtür (3), insbesondere während des Schließhilfsvorgangs (32), andererseits unterschiedlich ansteuert, insbesondere eine unterschiedliche Sensitivität der Sensoranordnung (13) einstellt.

12. Kraftfahrzeugschlossanordnung nach einem der vorhergehenden Ansprüche, **dadurch gekennzeichnet, dass** das Kraftfahrzeugschloss (5) eine Schlossfalle (35), die mit einem Schließteil (36), insbesondere einem Schließbügel, und eine der Schlossfalle (35) zugeordnete Sperrklinke (37) aufweist und dass die Aufdrückanordnung (6) mit der Schlossfalle (35) gekoppelt oder koppelbar ist, vorzugsweise, dass im Rahmen des Aufdrückvorgangs (9) die Verstellung der Kraftfahrzeugtür (3) in die Aufdrück-Türstellung auf die Verstellung der Schlossfalle (35) in deren Öffnungsrichtung (38) durch die Aufdrückanordnung (6) zurückgeht, und/oder, dass im Rahmen des Schließhilfsvorgangs die Verstellung der Kraftfahrzeugtür (3) in die Hauptschließ-Türstellung auf die Verstellung der Schlossfalle (35) in deren Schließrichtung (39) durch die Aufdrückanordnung (6) zurückgeht.

13. Kraftfahrzeugschlossanordnung nach einem der vorhergehenden Ansprüche, **dadurch gekennzeichnet, dass** eine Öffnungshilfsanordnung (40) vorgesehen ist, mit der die Sperrklinke (37) motorisch aushebbar ist und dass im Rahmen des Aufdrückvorgangs (9) die Steuerungsanordnung (12) zunächst das motorische Ausheben der Sperrklinke (37) auslöst.

14. Verfahren zur Ansteuerung einer Kraftfahrzeugschlossanordnung (1) nach einem der vorhergehenden Ansprüche,
**dadurch gekennzeichnet,**
**dass** mittels der Steuerungsanordnung (12) über die Sensoranordnung (13) eine vorbestimmte Auslöse-Bedienergeste (14, 15) erfassbar ist und dass mittels der Steuerungsanordnung (12) bei Erfassung der vorbestimmten Auslöse-Bedienergeste (14, 15) der Aufdrückvorgang (9) ausgelöst wird.

15. Verfahren nach Anspruch 14, **dadurch gekennzeichnet, dass** mittels der Steuerungsanordnung (12) der Aufdrückvorgang auf die Erfassung der Auslöse-Bedienergeste (14, 15) hin derart gesteuert wird, dass bei fortgesetzter Bewegung der Hand (H) des Bedieners, insbesondere mit unveränderter Bewegungsgeschwindigkeit, in Richtung der Eingriffs-Türkante (11) zu dem Zeitpunkt, zu dem die Hand (H) des Bedieners die Eingriffs-Türkante (11) erreicht, der Aufdrückvorgang (9) bereits ausgelöst, bereits fortgeschritten oder bereits abgeschlossen ist.

## Claims

1. Motor vehicle lock assembly for a motor vehicle door (3), in particular side door, coupled adjustably to a motor vehicle body (2), wherein a motor vehicle lock (5) is provided which, in the mounted state, is arranged on the motor vehicle door (3) or on the motor vehicle body (2), wherein the motor vehicle lock assembly (1), in particular the motor vehicle lock (5), has a push-open arrangement (6) with which the motor vehicle door (3) is adjustable in a motorized push-open operation (9) from a closing door position, in particular a main-closing door position or a preliminary closing door position, into a push-open door position positioned further in the opening direction (8) of the door and, as a result, an engagement gap can be produced between a door engagement edge (11) of the motor vehicle door (3) and the motor vehicle body (2), wherein a control arrangement (12) and, coupled thereto in terms of control technology, a sensor arrangement (13) are provided,
**characterized**
**in that** a predetermined triggering operator gesture (14, 15) can be detected by means of the control arrangement (12) via the sensor arrangement (13), and in that, when the predetermined triggering operator gesture (14, 15) is detected, the control arrangement (12) triggers the push-open operation (9).

2. Motor vehicle lock assembly according to Claim 1, **characterized in that** the predetermined triggering operator gesture (14, 15) comprises a predetermined triggering hand movement (16, 17), and **in that** the triggering hand movement (16, 17) comprises a predetermined movement pattern, in particular a predetermined movement path and/or a predetermined movement speed and/or a predetermined movement speed progression and/or a predetermined movement acceleration and/or a predetermined movement acceleration progression.

3. Motor vehicle lock assembly according to Claim 1 or 2, **characterized in that** the triggering hand movement (16, 17) moves towards the door engagement edge (11) of the motor vehicle door (3) or ends in the region of the door engagement edge (11) of the motor vehicle door (3) or brushes over the door engagement edge (11) of the motor vehicle door (3).

4. Motor vehicle lock assembly according to one of the preceding claims, **characterized in that** at least part of the triggering hand movement (16, 17) moves substantially transversely with respect to the door engagement edge (11).

5. Motor vehicle lock assembly according to one of the preceding claims, **characterized in that** the control arrangement (12) controls the push-open operation (9) in response to the detection of the triggering operator gesture (14, 15) in such a manner that, as the movement of the operator's hand (H) continues, in particular with an unchanged movement speed, in the direction of the door engagement edge (11), at the time at which the operator's hand (H) reaches the door engagement edge (11), the push-open operation (9) has already been triggered, has already progressed or has already been completed.

6. Motor vehicle lock assembly according to one of the preceding claims, **characterized in that** the sensor arrangement (13) is configured as a capacitive sensor arrangement, in particular as a capacitive proximity sensor arrangement, preferably **in that** the sensor arrangement (13) has at least one measuring electrode (23, 24) which is coupled in terms of control technology to the control arrangement (12), wherein there is a measurement capacitance between the measuring electrode (23, 24) and a further electrode or the motor vehicle mass (25), the size of which measurement capacitance depends on the position of the operator's hand (H).

7. Motor vehicle lock assembly according to one of the preceding claims, **characterized in that** the at least one measuring electrode (23, 24) is in elongate form, preferably **in that** the at least one measuring electrode (23, 24) is oriented substantially transversely with respect to at least part of the triggering hand movement (16, 17).

8. Motor vehicle lock assembly according to one of the preceding claims, **characterized in that** the sensor arrangement (13) is at least partially arranged in a cavity (26) of the motor vehicle door (3), in particular behind the door outer panel (27) of the motor vehicle door (3), preferably behind an opening in the door outer panel (27) of the motor vehicle door (3), or **in that** the sensor arrangement (13) is arranged in a cavity (28) of the motor vehicle body (2), in particular behind a body panel (29) of the motor vehicle body (2), or **in that** the sensor arrangement (13) is at least partially arranged in or on an add-on part, preferably between the add-on part and the motor vehicle door (3).

9. Motor vehicle lock assembly according to one of the preceding claims, **characterized in that** the motor vehicle lock assembly (1), in particular the motor vehicle lock (5), has a closing-aid arrangement (30) with which the motor vehicle door (3) is adjustable in a motorized closing-aid operation (32) from a preliminary closing door position into a main-closing door position positioned further in the closing direction (31) of the door.

10. Motor vehicle lock assembly according to one of the preceding claims, **characterized in that** the closing-aid arrangement (30) provides at least part of the push-open arrangement (9), preferably that the closing-aid arrangement (30) and the push-open arrangement (9) share a drive motor (34) for producing drive movements.

11. Motor vehicle lock assembly according to one of the preceding claims, **characterized in that** the control arrangement (12) activates the sensor arrangement (13) differently when the motor vehicle door (3) is closed, on the one hand, and when the motor vehicle door (3) is at least slightly open, in particular during the closing-aid operation (32), on the other hand, in particular sets a different sensitivity of the sensor arrangement (13).

12. Motor vehicle lock assembly according to one of the preceding claims, **characterized in that** the motor vehicle lock (5) has a lock latch (35) which with a locking part (36), in particular a locking bar, and a pawl (37) which is assigned to the lock latch (35), and **in that** the push-open arrangement (6) is coupled or can be coupled to the lock latch (35), preferably **in that**, within the scope of the push-open operation (9), the adjustment of the motor vehicle door (3) into the push-open door position is attributed to the adjustment of the lock latch (35) in the opening direction (38) thereof by means of the push-open arrangement (6), and/or **in that**, within the scope of the closing-aid operation, the adjustment of the motor vehicle door (3) into the main-closing door position is attributed to the adjustment of the lock latch (35) in the closing direction (39) thereof by means of the push-open arrangement (6).

13. Motor vehicle lock assembly according to one of the preceding claims, **characterized in that** an opening-aid arrangement (40) is provided with which the pawl (37) can be released in a motorized manner, and **in that**, within the scope of the push-open operation (9), the control arrangement (12) first of all triggers the motorized release of the pawl (37).

14. Method for activating a motor vehicle lock assembly (1) according to one of the preceding claims,
**characterized**
**in that** a predetermined triggering operator gesture (14, 15) can be detected by means of the control arrangement (12) via the sensor arrangement (13), and in that, when the predetermined triggering operator gesture (14, 15) is detected, the push-open operation (9) is triggered by means of the control arrangement (12).

15. Method according to Claim 14, **characterized in that** the push-open operation is controlled by means of the control arrangement (12) in response to the detection of the triggering operator gesture (14, 15) in such a manner that, as the movement of the operator's hand (H) progresses, in particular with an unchanged movement speed, in the direction of the door engagement edge (11), at the time at which the operator's hand (H) reaches the door engagement edge (11), the push-open operation (9) has already been triggered, has already progressed or has already been completed.

## Revendications

1. Arrangement de serrure de véhicule automobile pour une portière de véhicule automobile (3), notamment une portière latérale, couplée de manière positionnable avec une carrosserie de véhicule automobile (2), une serrure de véhicule automobile (5) étant présente qui, à l'état monté, est disposée sur la portière de véhicule automobile (3) ou sur la carrosserie de véhicule automobile (2),
l'arrangement de serrure de véhicule automobile (1), notamment la serrure de véhicule automobile (5), possédant un arrangement d'application de pression (6) avec lequel la portière de véhicule automobile (3), dans une opération d'application de pression motorisée (9), peut être positionnée notamment depuis une position de portière de fermeture principale ou une position de portière de pré-fermeture dans une position de portière d'application de pression, qui se trouve plus loin dans la direction de son ouverture (8), et un interstice de prise entre un bord de portière de prise (11) de la portière de véhicule automobile (3) et la carrosserie de véhicule automobile (2) peut ainsi être généré,
un arrangement de commande (12) et un arrangement capteur (13) connecté à celui-ci en technique de commande étant présents,
**caractérisé en ce**
**qu'**un geste d'opérateur de déclenchement (14, 15) prédéterminé peut être détecté au moyen de l'arrangement de commande (12) par le biais de l'arrangement capteur (13) et **en ce que** l'arrangement de commande (12), lors de la détection du geste d'opérateur de déclenchement (14, 15) prédéterminé, déclenche l'opération d'application de pression (9).

2. Arrangement de serrure de véhicule automobile selon la revendication 1, **caractérisé en ce que** le geste d'opérateur de déclenchement (14, 15) prédéterminé comporte un mouvement de la main de déclenchement (16, 17) prédéterminé et **en ce que** le mouvement de la main de déclenchement (16, 17) prédéterminé comprend un modèle de mouvement prédéterminé, notamment un trajet de mouvement prédéterminé et/ou une vitesse de mouvement prédéterminée et/ou une progression de vitesse de mouvement prédéterminée et/ou une accélération de mouvement prédéterminée et/ou une progression d'accélération de mouvement prédéterminée.

3. Arrangement de serrure de véhicule automobile selon la revendication 1 ou 2, **caractérisé en ce que** le mouvement de la main de déclenchement (16, 17) est dirigé sur le bord de portière de prise (11) de la portière de véhicule automobile (3) ou se termine dans la zone du bord de portière de prise (11) de la portière de véhicule automobile (3) ou encore balaye le bord de portière de prise (11) de la portière de véhicule automobile (3).

4. Arrangement de serrure de véhicule automobile selon l'une des revendications précédentes, **caractérisé en ce qu'**au moins une partie du mouvement de la main de déclenchement (16, 17) suit un tracé sensiblement transversal par rapport au bord de portière de prise (11).

5. Arrangement de serrure de véhicule automobile selon l'une des revendications précédentes, **caractérisé en ce que** l'arrangement de commande (12) commande l'opération d'application de pression (9) sur la détection du geste d'opérateur de déclenchement (14, 15) de telle sorte que lors d'un mouvement poursuivi de la main (H) de l'opérateur, notamment avec une vitesse de mouvement inchangée, en direction du bord de portière de prise (11) à l'instant auquel la main (H) de l'opérateur atteint le bord de portière de prise (11), l'opération d'application de pression (9) est déjà déclenchée, déjà poursuivie ou déjà terminée.

6. Arrangement de serrure de véhicule automobile selon l'une des revendications précédentes, **caractérisé en ce que** l'arrangement capteur (13) est réalisé sous la forme d'un arrangement capteur capacitif, notamment sous la forme d'un arrangement détecteur de proximité capacitif, de préférence **en ce que** l'arrangement capteur (13) possède au moins une électrode de mesure (23, 24) connectée en technique de commande à l'arrangement de commande (12), une capacité de mesure apparaissant entre l'électrode de mesure (23, 24) et une électrode supplémentaire ou la masse du véhicule automobile (25), dont la valeur est dépendante de la position de la main (H) de l'opérateur.

7. Arrangement de serrure de véhicule automobile selon l'une des revendications précédentes, **caractérisé en ce que** l'au moins une électrode de mesure (23, 24) est de configuration allongée, de préférence **en ce que** l'au moins une électrode de mesure (23, 24) est orientée sensiblement transversalement par rapport à au moins une partie du mouvement de la main de déclenchement (16, 17).

8. Arrangement de serrure de véhicule automobile selon l'une des revendications précédentes, **caractérisé en ce que** l'arrangement capteur (13) est disposé au moins en partie dans un espace creux (26) de la portière de véhicule automobile (3), notamment derrière la tôle extérieure de portière (27) de la portière de véhicule automobile (3), de préférence derrière une ouverture dans la tôle extérieure de portière (27) de la portière de véhicule automobile (3), ou **en ce que** l'arrangement capteur (13) est disposé dans un espace creux (28) de la carrosserie de véhicule automobile (2), notamment derrière une tôle de carrosserie (29) de la carrosserie de véhicule automobile (2), ou **en ce que** l'arrangement capteur (13) est disposé au moins en partie dans ou sur une pièce rapportée, de préférence entre la pièce rapportée et la portière de véhicule automobile (3).

9. Arrangement de serrure de véhicule automobile selon l'une des revendications précédentes, **caractérisé en ce que** l'arrangement de serrure de véhicule automobile (1), notamment la serrure de véhicule automobile (5), possède un arrangement d'aide à la fermeture (30) avec lequel la portière de véhicule automobile (3), dans une opération d'aide à la fermeture motorisée (32), peut être positionnée depuis une position de portière de pré-fermeture dans une position de portière de fermeture principale qui se trouve plus loin dans la direction de sa fermeture (31).

10. Arrangement de serrure de véhicule automobile selon l'une des revendications précédentes, **caractérisé en ce que** l'arrangement d'aide à la fermeture (30) fournit au moins une partie de l'arrangement d'application de pression (9), de préférence **en ce que** l'arrangement d'aide à la fermeture (30) et l'arrangement d'application de pression (9) se partagent un moteur d'entraînement (34) destiné à générer des mouvements d'entraînement.

11. Arrangement de serrure de véhicule automobile selon l'une des revendications précédentes, **caractérisé en ce que** l'arrangement de commande (12) commande l'arrangement capteur (13) différemment lorsque la portière de véhicule automobile (3) est fermée d'une part et lorsque la portière de véhicule automobile (3) est au moins légèrement fermée, notamment pendant l'opération d'aide à la fermeture (32), d'autre part, notamment règle une sensibilité différente de l'arrangement capteur (13).

12. Arrangement de serrure de véhicule automobile selon l'une des revendications précédentes, **caractérisé en ce que** la serrure de véhicule automobile (5) possède un loquet de serrure (35), qui avec une partie de fermeture (36), notamment un étrier de fermeture, et un cliquet d'arrêt (37) associé au loquet de serrure (35) et **en ce que** l'arrangement d'application de pression (6) est couplé ou peut être couplé avec le loquet de serrure (35), de préférence **en ce que** dans le cadre de l'opération d'application de pression (9), le positionnement de la portière de véhicule automobile (3) dans la position de portière d'application de pression retourne au positionnement du loquet de serrure (35) dans la direction de son ouverture (38) par l'arrangement d'application de pression (6) et/ou **en ce que** dans le cadre de l'opération d'aide à la fermeture, le positionnement de la portière de véhicule automobile (3) dans la position de portière de fermeture principale retourne au positionnement du loquet de serrure (35) dans la direction de sa fermeture (39) par l'arrangement d'application de pression (6).

13. Arrangement de serrure de véhicule automobile selon l'une des revendications précédentes, **caractérisé en ce qu'**un arrangement d'aide à l'ouverture (40) est présent, avec lequel le cliquet d'arrêt (37) peut être soulevé de manière motorisée et **en ce que** dans le cadre de l'opération d'application de pression (9), l'arrangement de commande (12) déclenche tout d'abord le levage motorisé du cliquet d'arrêt (37).

14. Procédé pour commander un arrangement de serrure de véhicule automobile (1) selon l'une des revendications précédentes,
**caractérisé en ce**
**qu'**un geste d'opérateur de déclenchement (14, 15) prédéterminé peut être détecté au moyen de l'arrangement de commande (12) par le biais de l'arrangement capteur (13) et **en ce que** l'opération d'application de pression (9) est déclenchée au moyen de l'arrangement de commande (12) lors de la détection du geste d'opérateur de déclenchement (14, 15) prédéterminé.

15. Procédé selon la revendication 14, **caractérisé en ce que** l'opération d'application de pression (9) est commandée au moyen de l'arrangement de commande (12) sur la détection du geste d'opérateur de déclenchement (14, 15) de telle sorte que lors d'un mouvement poursuivi de la main (H) de l'opérateur, notamment avec une vitesse de mouvement inchangée, en direction du bord de portière de prise (11) à l'instant auquel la main (H) de l'opérateur atteint le bord de portière de prise (11), l'opération d'application de pression (9) est déjà déclenchée, déjà poursuivie ou déjà terminée.
